# EUROPÄISCHE PATENTANMELDUNG

(11) **EP 4 583 217 A1**
(43) Veröffentlichungstag der Anmeldung: **09.07.2025**
(21) Anmeldenummer: 24150047.9
(22) Anmeldetag: 02.01.2024
(51) Int. Cl.: H01M 10/04

(54) **BEWEGUNGSFÜHRUNG EINER RELATIVBEWEGUNG ZWISCHEN EINEM TISCH EINES BATTERIEZELLEN-STACKING-SYSTEMS UND EINER ZUFÜHRVORRICHTUNG MIT BAHNFÜHRUNGSKOMPONENTEN FÜR EINE SEPARATORFOLIENBAHN DES BATTERIEZELLEN-STACKING-SYSTEMS**

(71) Anmelder: Siemens Aktiengesellschaft, 80333 München (DE)
(72) Erfinder: Vogel, Theo, 91327 Gößweinstein (DE); Linke, Hartmut, 91056 Erlangen (DE)
(74) Vertreter: Siemens Patent Attorneys

(57) **Zusammenfassung**

Die Erfindung betrifft ein Verfahren zur Bewegungsführung einer Relativbewegung zwischen einem Tisch (T) eines Batteriezellen-Stacking-Systems und einer Zuführvorrichtung (W) mit Bahnführungskomponenten für eine Separatorfolienbahn (S) des Batteriezellen-Stacking-Systems sowie eine zugehörige Steuerungsvorrichtung. Durch eine vorgeschlagene Relativbewegung mit Bewegungsanteilen in vertikaler Richtung überlagert zur Bewegung in horizontaler Richtung wird das Beschleunigungsprofil der Separatorfolienbahn derart geändert, dass Maximalwerte betragsmäßig reduziert werden.

## Beschreibung

Die Erfindung betrifft ein Verfahren zur Bewegungsführung einer Relativbewegung zwischen einem Tisch eines Batteriezellen-Stacking-Systems und einer Zuführvorrichtung mit Bahnführungskomponenten für eine Separatorfolienbahn des Batteriezellen-Stacking-Systems sowie eine zugehörige Steuerungsvorrichtung.

In der Batteriezellenproduktion ist der Prozess des Stackings verbreitet, bei welchem die Anoden und Kathoden der Zelle durch eine Z-förmig angeordnete Separatorfolie getrennt werden. In den Maschinen zur Produktion solcher Zellen verfährt die Separatorfolie relativ zur teils gefertigten Batteriezelle, die auf einem Tisch liegt, so, dass die einzelnen Anoden- und Kathoden-Folien zwischen zwei Abschnitten der Separatorfolie abgelegt werden können und so von der Separatorfolie umschlossen werden. Es sind verschiedene Kinematiken von Maschinen bekannt, in der die Bewegung des Produkts, quasi des entstehenden Zell-Stapels, relativ zur Zuführung der Separatorfolie variiert. Diese Kinematiken lassen sich grob in zwei Typen einteilen, nämlich Aufbauten mit linearem Tisch und mit rotatorischem Tisch.

Der Separator ist eine kontinuierliche Bahn, die durch eine Maschine geführt wird, bis sie auf dem Tisch zur Batteriezelle gefaltet wird. Die Faltung entsteht durch eine Relativbewegung zwischen dem Tisch und der letzten Führung der Separatorfolie vor dem Tisch in Kombination mit einer Klemmung der Separatorfolie an den beiden Endlagen des Tischs. Die Klemmung sorgt dafür, dass die Bahn Z-förmig gefaltet werden kann.

Üblicherweise besteht bei Maschinen zur Batteriezellenproduktion eine kleine Toleranz des auf die Separatorfolie wirkenden Bahnzugs während des Prozesses. Abhängig von der Kinematik der Maschine entstehen durch den Faltungsprozess mit der damit verbundenen Relativbewegung Abweichungen der Kraft, die auf die Bahn der Separatorfolie ausgeübt wird. Dies liegt an dem resultierenden Einfluss der Relativbewegung auf die Beschleunigung der Bahn, durch welche alle beweglichen, nicht angetriebenen, massebehaftete Elemente in der Mechanik, die zur Bahnführung dienen, wie beispielsweise Führungsrollen, Tänzer, etc., beschleunigt werden müssen. Alle diese Massen müssen beschleunigt und abgebremst werden.

Es ist eine Aufgabe der vorliegenden Erfindung, eine Beschleunigung einer Separatorfolienbahn in einem Batteriezellen-Stacking-System zu verbessern. Diese Aufgabe wird durch die Merkmale der unabhängigen Ansprüche gelöst. Vorteilhafte Ausgestaltungen sind in den abhängigen Ansprüchen angegeben.

Die Erfindung betrifft ein Verfahren zur Bewegungsführung einer Relativbewegung zwischen einem Tisch eines Batteriezellen-Stacking-Systems und einer Zuführvorrichtung mit Bahnführungskomponenten für eine Separatorfolienbahn des Batteriezellen-Stacking-Systems, aufweisend folgende Schritte:
- Ausführen eines horizontalen Anteils der Relativbewegung zur horizontalen Verlagerung der Relativposition zwischen Tisch und Zuführvorrichtung durch einen Scheitelpunkt hindurch, wobei im Scheitelpunkt die Separatorfolienbahn vertikal steht, so dass durch die horizontale Verlagerung Anoden und Kathoden im Wechsel auf einen jeweiligen Abschnitt der Separatorfolienbahn aufgelegt werden können, gekennzeichnet durch ein Ausführen eines vertikalen Anteils der Relativbewegung, wobei durch den vertikalen Anteil eine Beschleunigung der Bewegung der Separatorfolienbahn zumindest abschnittsweise, insbesondere in etwa im Bereich des Scheitelpunktes, reduziert wird.

Durch die relative Bewegung von Tisch und Zuführvorrichtung zueinander wird zu Beginn eines Bewegungsablaufs die Separatorfolie anschaulich gesprochen zurück in die Maschine geschoben, bis sie ab einer bestimmten Relativposition zwischen Tisch und Zuführvorrichtung anschaulich gesprochen wieder aus der Maschine herausgezogen wird. Ein Bewegungsablauf ist beispielsweise eine Sequenz der Relativbewegung, in der sich die Positionierung von Tisch und Zuführvorrichtung zueinander aus einer Startpositionierung mit maximalem Abstand in horizontaler erster Richtung über eine Position mit minimalem Abstand in horizontaler Richtung, in der sich der Tisch insbesondere mit einer Tischkante, an deren Seite die Separatorfolie geklemmt wird oder wurde, direkt unterhalb der Zuführvorrichtung befindet, hier Scheitelpunkt genannt, hin zu einer Endposition mit maximalem Abstand in horizontaler zweiter, entgegengesetzter Richtung ändert.

Es ist zu unterscheiden zwischen den Bewegungsabläufen und Bewegungsprofilen der Komponenten des Batteriezellen-Stacking-Systems, wie insbesondere dem Tisch und der Zuführvorrichtung, und dem Bewegungsprofil der Bahn, also der Separatorfolienbahn.

Es wird eine Richtungsumkehr der Bahn oder ein Vorzeichenwechsel der Geschwindigkeit der Bahn während der Relativbewegung, insbesondere während einer Positionierung des Tischs zwischen den zwei Endlagen oder während einer Verfahrbewegung der Zuführvorrichtung, erzeugt, die durch die Kinematik der Maschine bedingt ist. Die Richtungsumkehr der Bahn sorgt durch einen Wechsel der Richtung der Geschwindigkeit zu einer Überhöhung in der Beschleunigung der Separatorfolie, d.h. zu einem sehr steilen Anstieg der Beschleunigung innerhalb einer kurzen Zeitspanne und einem darauffolgenden ebenfalls relativ starken Abfall.

Die Beschleunigung in der Separatorfolie wird durch die Bewegung der Komponenten zueinander hervorgerufen und ist in der Regel eindimensional, aufgrund der starren Bahnführung in der Wickelmaschine.

Durch die vorgeschlagene Relativbewegung mit Bewegungsanteilen in vertikaler Richtung überlagert zur Bewegung in horizontaler Richtung wird das Beschleunigungsprofil der Separatorfolienbahn derart geändert, dass Maximalwerte betragsmäßig reduziert werden. Es wird ein Beschleunigungsprofil für die Separatorfolienbahn bereitgestellt, das in Hinblick auf extreme Beschleunigungen verbessert ist.

Die Beschleunigungsüberhöhung wird verringert, da durch die vertikale Relativbewegung der lotrechte Abstand zwischen der Tischoberfläche und der Zuführvorrichtung, insbesondere der letzten Bahnführungskomponente der Bahn, im Bereich der Annäherung von Tisch und Zuführkomponente zueinander vergrößert wird bzw. bei der Vergrößerung des Abstandes zueinander wieder verkleinert wird.

Je größer der lotrechte Abstand zwischen der Tischoberfläche und der letzten Führung der Bahn ist, desto kleiner ist die Überhöhung der Beschleunigung der Separatorfolie rund um den Scheitelpunkt.

Ein Nachteil der hinsichtlich der Beschleunigung der Separatorfolie verbesserten Relativbewegung ist, dass die Beschleunigung der Komponenten des Batteriezellen-Stacking-Systems deutlich zunimmt, um den gleichen Durchsatz der Stacking-Maschine sicherzustellen. Wird beispielsweise der Tisch bewegt, ist die Beschleunigung des Tischs beim in Hinblick auf die Beschleunigung der Separatorfolie verbesserten Profil höher als bei einem üblicherweise verwendeten beschleunigungsbegrenzten Bewegungsprofil des Tischs. Das führt zu einer erhöhten Belastung der Maschine. Ein dadurch hervorgerufener erhöhter Verschleiß ist abzuwägen gegenüber einer verbesserten Kraftabweichung der Separatorfolienbahn aufgrund der reduzierten Beschleunigungswerte über das Bahnbewegungsprofil hinweg.

In Ausführungen wird die horizontale Bewegung derart angesteuert, dass die Geschwindigkeit bis zum Scheitelpunkt zunimmt, dann eine kurze Fahrt mit konstanter Geschwindigkeit folgt und dann bis zum Erreichen der Endlage, also dem Umkehrpunkt, an dem das Einlegen der Elektrode und das Klemmen der Bahn erfolgt, die Geschwindigkeit wieder abnimmt.

In Ausführungen wird gegenüber dieser Tischgeschwindigkeit mit trapezförmigem Profil ein sogenanntes M-Profil verwendet, bei dem die Geschwindigkeit bereits vor Erreichen des Scheitelpunktes reduziert wird und danach nochmals zunimmt, um dann wieder bis zum Umkehrpunkt abzunehmen. Ein M-Profil im horizontalen Anteil der Relativbewegung weist gegenüber einem trapezförmigen Profil den Vorteil auf, dass ebenfalls die Beschleunigungsüberhöhung in der Beschleunigung der Separatorfolienbahn reduziert wird. Vorteilhafterweise werden M-Profile oder ähnliche analytisch berechnete Profile für den horizontalen Bewegungsanteil zusätzlich zu dem vorgeschlagenen vertikalen Anteil der Relativbewegung vorgesehen, um die Beschleunigung der Separatorfolie über den Positioniervorgang hinweg besonders geeignet zu reduzieren.

Gemäß einer Ausgestaltung bewirkt der vertikale Anteil der Relativbewegung eine bogenförmige Relativbewegung. Die Überlagerung von horizontalem und vertikalem Bewegungsanteil führt zu einer annähernd pendelartigen Verlagerung von Zuführvorrichtung und Tisch zueinander, wobei der Abstand von Zuführvorrichtung und Tisch zueinander in den beiden Endlagen, insbesondere am Start- und Endpunkt eines Bewegungsvorgangs von einer Elektroden-Einlegeposition bis zur nächsten und insbesondere in den beiden horizontal extremal ausgelenkten Positionen, in vertikaler Richtung minimal ist. Beispielsweise ist der Abstand von Zuführvorrichtung und Tisch zueinander in vertikaler Richtung maximal, wenn die Separatorfolienbahn senkrecht steht, also im Scheitelpunkt.

Beispielsweise ist die Relativbewegung insbesondere rund um den Scheitpunkt bogenförmig.

Gemäß einer Ausgestaltung wirkt der vertikale Anteil der Relativbewegung vor Erreichen des Scheitelpunktes einer Bewegung der Separatorfolienbahn aufgrund des horizontalen Anteils der Relativbewegung in die Zuführvorrichtung hinein entgegen und nach Erreichen des Scheitelpunktes einer Bewegung der Separatorfolienbahn aufgrund des horizontalen Anteils der Relativbewegung aus der Zuführvorrichtung heraus entgegen. Dadurch werden starke Anstiege und Abfälle im Beschleunigungsprofil der Separatorfolienbahn verhindert.

Gemäß einer Ausgestaltung bewirkt der vertikale Anteil der Relativbewegung an Umkehrpunkten, insbesondere bei maximaler horizontaler Verlagerung, ein quasi vollständiges Aufliegen der Separatorfolienbahn auf dem Tisch oder parallel zum Tisch, insbesondere indem der vertikale Anteil der Relativbewegung die Zuführvorrichtung und den Tisch in vertikaler Richtung unter Berücksichtigung eines auf dem Tisch befindlichen Stapels maximal aneinander annähert.

Somit kann beispielsweise der Tisch bis zum Ende der vertikalen Positionierung so weit angehoben werden, bis die Bahn annähernd flach, oder annähernd ohne verbleibenden Winkel zwischen Bahn und Tisch, auf dem Tisch aufliegt und keine Längenänderung mehr durch die Klemmung verursacht wird. Ebenso kann das Batteriezellen-Stacking-System soweit nach unten verfahren werden, dass die Bahn annähernd flach auf dem Tisch aufliegt.

Gemäß einer Ausgestaltung bewirkt durch das quasi vollständige Aufliegen der Separatorfolienbahn eine Klemmung eines jeweiligen Abschnitts der Separatorfolienbahn annähernd keine durch eine Längenänderung verursachte Beschleunigung an der Separatorfolienbahn.

Durch die Klemmung der Separatorfolie, die nach jedem Falten oder Überdecken einer Elektrode mit der Separatorfolie erfolgt, wird eine kurzzeitige Überhöhung der Beschleunigung der Separatorfolie hervorgerufen. Es kommt zu einer kurzzeitigen Abweichung des Bahnzugs durch die Klemmung der Separatorfolie, der sogenannte "Klemmschlag". Durch den weiteren Freiheitsgrad insbesondere einer vertikalen Tischbewegung, kann der Tisch in vertikaler Richtung, beim Erreiche der horizontalen Endposition so weit angehoben werden, dass eine Tischhöhe von null vorliegt. Die Bahn liegt dann Flach auf dem Tisch auf. Durch die Klemmung wird dann keine Bahnlängenänderung mehr verursacht.

Nachdem der Tisch in Relation zur Zuführvorrichtung in der Endposition vorliegt, wird im nächsten Prozessschritt die Kathode (bzw. Anode im Wechsel) auf der Batteriezelle, d.h. auf dem Tisch, abgelegt und das Material wird geklemmt. Da beim linearen Tisch ein lotrechter Abstand zwischen der Oberfläche der Batteriezelle / des Tischs zur letzten Führung der Bahn, beispielsweise einer letzten Führungsrolle, besteht, wird durch die Klemmung oder die Ablage der Kathode bzw. Anode eine Längenänderung dieses Bahnabschnitts erzeugt. Der Betrag dieser Längenänderung ist abhängig von der Kinematik der Maschine und den Endpositionen des Tischs.

Bei einem großen lotrechten Abstand zwischen der Tischoberfläche und der letzten Führung der Bahn ist die Längenänderung der Bahn durch die Klemmung ebenfalls groß. Durch die überlagerte Relativbewegung in vertikaler Richtung ist es vorteilhaft möglich, in den Endlagen den lotrechten Abstand zu verringern und insbesondere auf null zu reduzieren, ohne die Vorteile der beschleunigungsverbesserten Bewegung rund um den Scheitelpunkt zu verlieren.

Es ist ferner möglich, dass sich der Abstand zwischen Tisch und unterem Ende der Rollen ins Negative umkehrt, also sich der Tisch in der Endposition oberhalb der Rollen befindet. Auch dadurch wird der Klemmschlag verhindert.

Gemäß einer Ausgestaltung erfolgt die Relativbewegung durch einen in horizontaler und in vertikaler Richtung bewegbaren Tisch oder durch einen in vertikaler Richtung bewegbaren Tisch und eine in horizontaler Richtung bewegbare Zuführvorrichtung. Um die durch die Kinematik der Stacking-Maschine bedingte Überhöhung der Beschleunigung der Separatorfolie zu reduzieren, kann die Tischbewegung auf einen weiteren Freiheitsgrad erweitert werden. Dabei bewegt sich der Tisch während einer Positionierung wie bislang horizontal und überlagert dazu in vertikaler Richtung.

Für Anwendungen, in welchen Batteriezellen-Stacking-Systeme in der Höhe der Zuführvorrichtung nicht flexibel sind, insbesondere aufgrund in vertikaler Richtung fest verbauten Bahnführungskomponenten, bietet ein Tisch mit zwei Freiheitsgraden besondere Vorteile.

Ebenso bestehen Varianten mit in horizontaler Richtung bewegbarer Zuführvorrichtung, bei welchen der Tisch für die vertikale Bewegung zuständig ist.

Gemäß einer Ausgestaltung erfolgt die Relativbewegung durch eine in horizontaler und in vertikaler Richtung bewegbare Zuführvorrichtung oder durch eine in vertikaler Richtung bewegbare Zuführvorrichtung und einen in horizontaler Richtung bewegbaren Tisch. Dies ist insbesondere vorteilhaft in Anwendungen, in welchen der Tisch nur eingeschränkt beweglich ist, beispielsweise aufgrund weiterer Komponenten in der Batteriefertigungsanlage zur Zuführung der Elektroden, Weiterverarbeitung der fertig gestapelten Batteriezelle etc.

Beispielsweise ist der Tisch in einer Variante nur horizontal verfahrbar und die Zuführvorrichtung übernimmt die Bewegungsführung in vertikaler Richtung.

Gemäß einer Ausgestaltung wird die Relativbewegung hinsichtlich einer Reduzierung der Beschleunigung der Separatorfolienbahn optimiert.

Für das vorgeschlagene Optimierungsverfahren wird die Relativbewegung unter Berücksichtigung der Kinematik der Maschine so angepasst, dass maximale Beschleunigungswerte der Bahn entlang der Bewegung des Tischs möglichst gering sind.

Es wird somit durch die Optimierung der Relativbewegung eine Reduzierung der Beschleunigung der Separatorfolienbahn unter Berücksichtigung einer maximal zulässigen Beschleunigung für die Separatorbahn erreicht.

Insbesondere werden über den gesamten Positioniervorgang hinweg betragsmäßig möglichst geringe Beschleunigungen erreicht.

Beispielsweise werden ferner Randbedingungen vorgegeben, die die maximale Belastung der beteiligten Antriebe zum Ausführen der Relativbewegung betreffen. Je nach vorgegebenen Randbedingungen, wie beispielsweise Dynamikgrenzwerten der Achsen, insbesondere Ruck, Beschleunigung und Geschwindigkeit, werden unterschiedliche Kurven für die Relativbewegung ermittelt.

Gemäß einer Ausgestaltung gehen in einen wobei in einen Optimierungsalgorithmus geometrische Randbedingungen, insbesondere eine Amplitude des vertikalen Bewegungsanteils, eine Tischgeometrie, eine Höhe zwischen einer letzten Führungskomponente des Batteriezellen-Stacking-Systems und dem Tisch, eine Tischbreite oder ein maximaler horizontaler Abstand zwischen einer Mitte des Tisches und der letzten Führungskomponente des Batteriezellen-Stacking-Systems, eingehen sowie ferner Dynamikgrenzen beteiligter Antriebe des Tischs und/ oder des Batteriezellen-Stacking-Systems, insbesondere maximal zulässige Werte für eine Geschwindigkeit, eine Beschleunigung und/oder einen Ruck jeweiliger axialer Bewegungen .

Die Bewegung des Tischs relativ zur Zuführvorrichtung des Batteriezellen-Stacking-Systems wird insbesondere unter Vorgabe des maximal gewünschten Rucks an den an der Relativbewegung beteiligten Antrieben, insbesondere einem maximal gewünschten Ruck an den Antrieben des Tisches, und unter Berücksichtigung der gewünschten Grenzen der Geschwindigkeit und Beschleunigung der einzelnen Bewegungsanteile, insbesondere der jeweiligen horizontalen und vertikalen Tischgeschwindigkeit und Tischbeschleunigung, so angepasst, dass die Beschleunigung der Separatorfolie betragsmäßig über die gesamte Positionierung von Tisch relativ zu Zuführvorrichtung des Batteriezellen-Stacking-Systems möglichst gering ist.

Die Erfindung betrifft ferner eine Steuerungsvorrichtung zur Bewegungsführung ausgestaltet und eingerichtet zur Durchführung des Verfahrens gemäß einem der obigen Ausgestaltungen. Insbesondere ist die Steuerungsvorrichtung eine Bewegungssteuerung oder eine PLC für eine Batteriezellen-Stacking-Maschine.

Insbesondere wird eine Steuerungsvorrichtung vorgeschlagen, die eine Bewegung des Tisches ansteuert, der sich relativ zur Zuführvorrichtung des Batteriezellen-Stacking-Systems bewegt.

Alternativ ist die Steuerungsvorrichtung dazu ausgebildet, die Bewegung der Zuführvorrichtung des Batteriezellen-Stacking-Systems und insbesondere damit verbunden des gesamten Batteriezellen-Stacking-Systems anzusteuern.

Alternativ ist die Steuerungsvorrichtung dazu ausgebildet, Bewegungen sowohl des Batteriezellen-Stacking-Systems und insbesondere der Zuführvorrichtung als auch des Tisches koordiniert anzusteuern.

Für die Steuerungsvorrichtung wird somit ein Bewegungsprofil vorgegeben, welches eine durch die Relativbewegung verursachte Beschleunigung über den Positioniervorgang hinweg, d.h. über die Relativbewegung hinweg, auf eine auftretende Bahnbeschleunigung hin optimiert, sodass die auftretenden maximalen Beschleunigungswerte möglichst niedrig sind.

Die Erfindung betrifft ferner ein Batteriezellen-Stacking-System mit Zuführvorrichtung mit Bahnführungskomponenten für eine Separatorfolienbahn und Tisch, aufweisend eine Steuerungsvorrichtung gemäß einer der obigen Ausgestaltungen, sowie aufweisend Antriebe zur Ausführung einer Relativbewegung zwischen dem Tisch und der Zuführvorrichtung in horizontaler und vertikaler Bewegungsrichtung.

Durch die Ausführung des Batteriezellen-Stacking-Systems mit einer zweidimensionalen Relativbewegung zwischen Zuführvorrichtung und Tisch werden die Vorteile der reduzierten Beschleunigung an der Separatorfolienbahn erzielt und eine Produktion von Batteriezellen wird vereinfacht oder die Qualität der gefertigten Batteriezellen erhöht.

Die Erfindung wird nachfolgend anhand von Ausführungsbeispielen mit Hilfe der Figuren näher erläutert. Es zeigen:
Figur 1 eine schematische Darstellung zur Veranschaulichung eines Batteriezellen-Stacking-Systems gemäß dem Stand der Technik;
Figur 2 eine schematische Darstellung zur Veranschaulichung eines Batteriezellen-Stacking-Systems gemäß einem ersten Ausführungsbeispiel der Erfindung;
Figur 3eine schematische Darstellung eines Diagramms zur Gegenüberstellung von jeweiligen Beschleunigungen der Separatorfolie für verschiedene Bewegungsprofile für ein zweites Ausführungsbeispiel der Erfindung;
Figur 4eine schematische Darstellung eines Diagramms zur Gegenüberstellung jeweiliger Bewegungsprofile für das zweite Ausführungsbeispiel der Erfindung;
Figur 5eine schematische Darstellung eines Diagramms zur Gegenüberstellung von jeweiligen Beschleunigungen der Separatorfolie für verschiedene Bewegungsprofile für ein drittes Ausführungsbeispiel der Erfindung;
Figur 6eine schematische Darstellung eines Diagramms zur Gegenüberstellung jeweiliger Bewegungsprofile für das dritte Ausführungsbeispiel der Erfindung
Figur 7eine schematische Darstellung eines Diagramms zur Gegenüberstellung verschiedener Bahnzugverläufe gemäß einem vierten Ausführungsbeispiel der Erfindung;
Figur 8eine schematische Darstellung eines Diagramms zur Gegenüberstellung verschiedener freier Weglängen der Separatorfolienbahn gemäß dem vierten Ausführungsbeispiel.

In den Figuren sind funktionsgleiche Elemente mit denselben Bezugszeichen versehen, sofern nichts anderes angegeben ist.

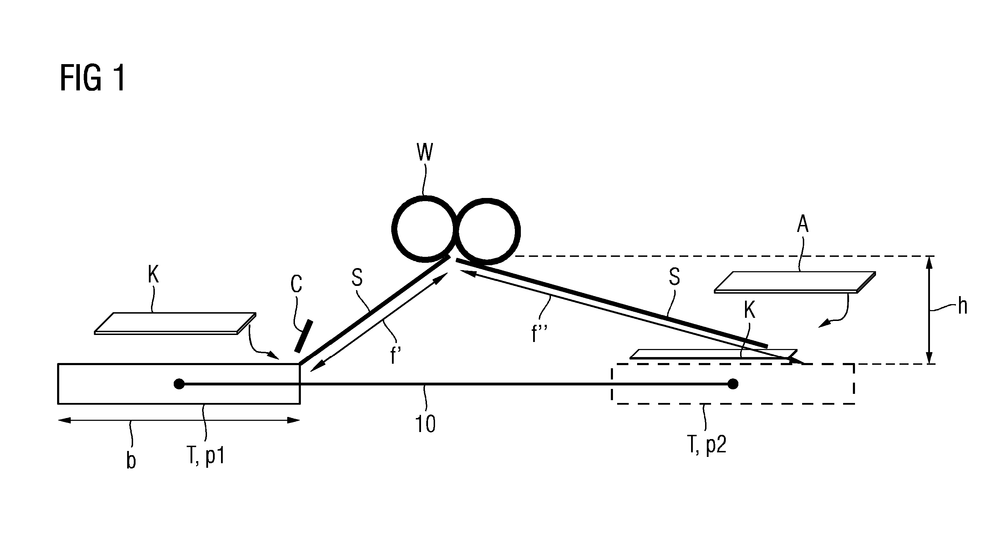

In Figur 1 ist vereinfacht ein Ausschnitt eines Aufbaus einer Batterie-Stacking-Anlage oder Batteriezellen-Stapelmaschine dargestellt, bei dem ein Tisch T in einer Startposition p1 und einer nach Durchlaufen eines Bewegungsablaufs 10 eingenommenen Endposition p2 gezeigt ist. Es ist der Abschnitt der Maschine dargestellt, bei dem auf einen zu bildenden Batteriezellenstapel Kathoden K und Anoden A im Wechsel gestapelt werden, mit dazwischenliegender Separatorfolie S. Es handelt sich somit um einen Aufbau, bei dem ein Tisch T mit entsprechenden Antrieben versehen ist, um eine Bewegung von der Startposition p1 in die Endposition p2 durchführen zu können, wobei in der hier als Startposition bezeichneten Stellung ein Einlegen oder Auflegen eines ersten Elektrodenabschnitts, beispielsweise einer Kathode K, auf einen auf dem Tisch befindlichen Batteriezellenstapel (nicht dargestellt) erfolgt.

Durch das Auflegen der Elektrode wird der Effekt einer Klemmung erzielt. Dies verursacht eine Bahnlängenänderung der Separatorfolienbahn, wenn die Separatorfolie im Bereich des Tisches mit ihrer freien Weglänge nicht parallel zum Tisch verläuft, wie im rechten Stapelvorgang der Figur 1 gezeigt. Die Höhe h zwischen unterem Rollenende und Oberseite des Batteriezellstapels beträgt dann beispielsweise einige Zentimeter. Mittels eines Klemmhebels C wird die Separatorfolienbahn S nach dem Einlegen der Elektrode niedergedrückt. Anschließend erfolgt in der Endposition p2 wiederum ein Auflegen eines zweiten Elektrodenabschnitts, der Anode A, sowie wiederum das Klemmen der Separatorfolienbahn S.

Die Separatorfolienbahn S wird mittels einer Zuführvorrichtung bereitgestellt. Insbesondere wird die Separatorfolienbahn S von einer Rolle abgewickelt. Über verschiedene Mechanismen wie Tänzersysteme und/ oder Webakkumulatoren wird eine möglichst gleichmäßigen Bahnspannung aufrechterhalten. Eine letzte Rolleneinrichtung, bevor die Bahn S zum Batteriezellenstapel geführt wird, wird hier als Zuführvorrichtung W bezeichnet. Es kommen beispielsweise gegenüberliegend angeordnete, bahnführende Rollen zum Einsatz.

Der Tisch T wird horizontal verfahren, so dass eine freie Länge f, f" der Separatorfolienbahn S variiert, abhängig von einem vom Aufbau vorgegebenen Abstand h zwischen Zuführvorrichtung W und Tischoberfläche sowie abhängig von einer Breite b des Tisches T, die u.a. durch die Abmessungen eines zu fertigenden Batteriestapels vorgegeben wird. Dabei wird ein eindimensionales Bewegungsprofil 10 durchlaufen.

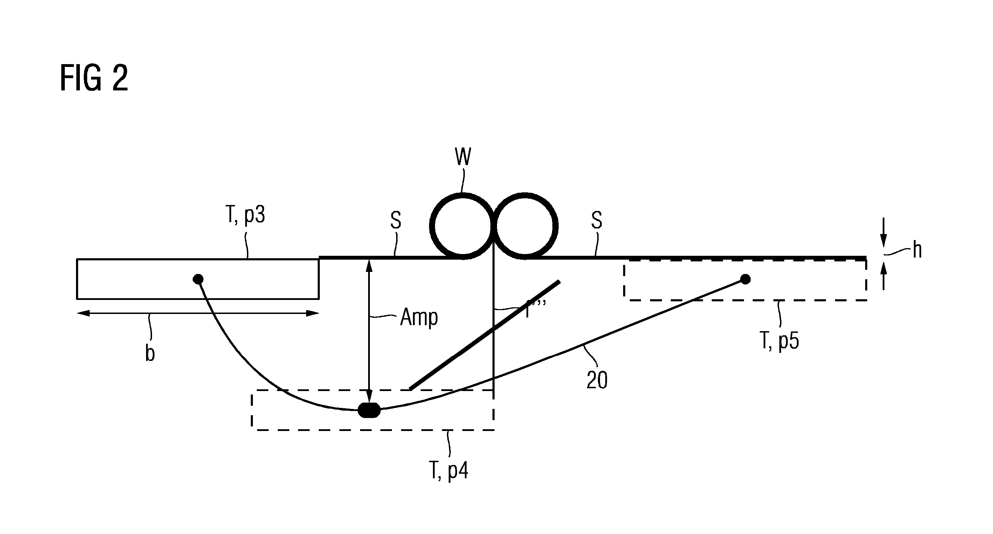

Gemäß einem ersten Ausführungsbeispiel der Erfindung werden die Startposition p3 und die Endposition p5 des Tisches T in horizontaler Richtung beibehalten, ein Bewegungsprofil zwischen diesen beiden Punkten wird jedoch derart verändert, dass sich der Tisch T auch in vertikaler Richtung bewegt und ein zweidimensionales Bewegungsprofil 20 durchläuft. Figur 2 veranschaulicht eine beispielsweise bogenförmige Bewegung des Tisches T in zwei Dimensionen, vertikal und horizontal.

Dabei ist beispielsweise die Auslenkung Amp am stärksten zu dem Zeitpunkt, zu dem die horizontale Position erreicht ist, in der die Separatorfolienbahn S in einer senkrechten Ausrichtung steht. Dies ist die Position p4 im zweidimensionalen Bewegungsprofil 20, die den Scheitelpunkt bildet.

Die Bewegung des Tisches auch in vertikaler Richtung bewirkt den Effekt, dass die Ausgangs- und Endlage p3, p5 des Tisches T während des Einlegens der Elektroden so gewählt werden kann, dass die Separatorfolie S ausgehend vom untersten Punkt der Rolle der Zuführvorrichtung W im Wesentlichen waagrecht verläuft. Die Höhe h ist dann annähernd 0.

Dadurch wird der Klemmschlag, der sich auf die an der Bahn herrschende Spannung oder den Bahnzug beim Einlegen und Klemmen der Elektroden am Rande des Tischs auswirkt, verbessert und insbesondere bei einem vollständig waagrechten Verlauf der Folie optimiert. Gleichzeitig kann der Tisch für den weiteren Ablauf der Bewegung hin zum Scheitelpunkt mit ausreichendem Abstand zur Zuführvorrichtung verfahren werden. Insbesondere muss der Tisch im Scheitelpunkt nicht unnötig nah an der Zuführvorrichtung vorbeigeführt werden. Vorteilhafterweise wird dadurch dem Effekt der Beschleunigungsüberhöhung im Scheitelpunkt entgegengewirkt. Es muss in einer vergleichbaren Zeitspanne gegenüber einem herkömmlichen Aufbau mit eindimensionaler Bewegung vor Erreichen des Scheitelpunktes weniger Bahnmaterial in die Zuführvorrichtung aufgenommen werden und entsprechend nach Erreichen des Scheitelpunktes auch wiederum weniger Material in der vergleichbaren Zeit herausgezogen werden, so dass geringere Beschleunigungen an der Bahn entstehen.

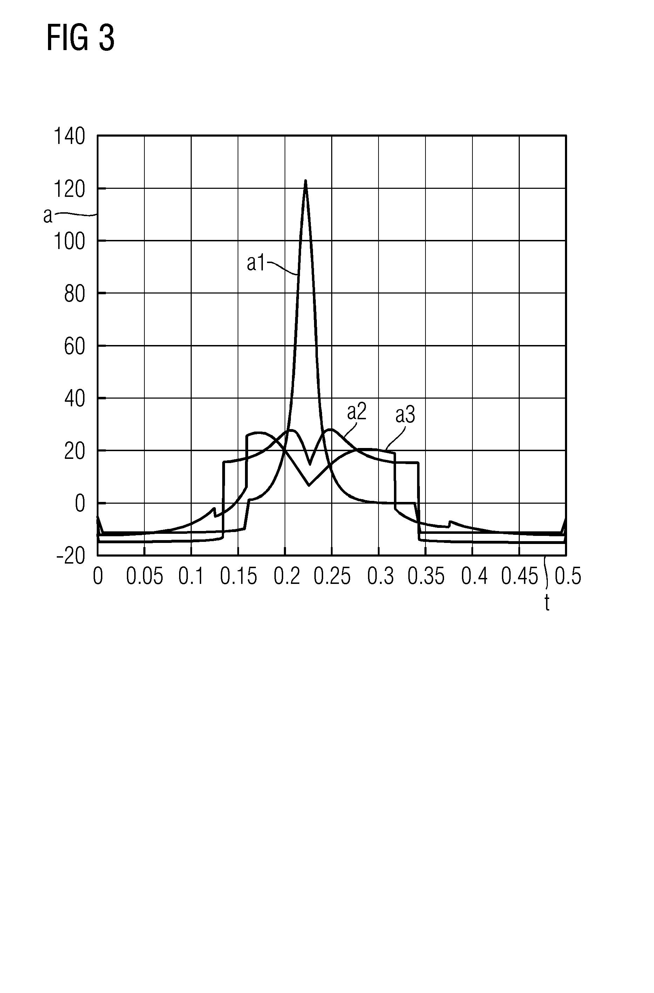

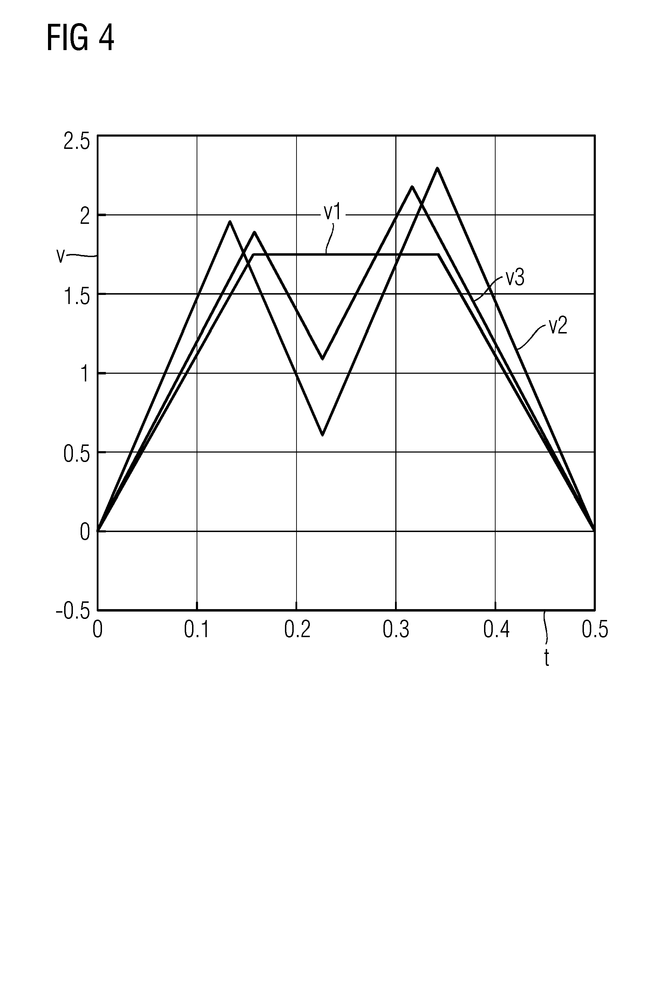

In Figur 3 ist schematisch dargestellt, wie sich die Beschleunigung a an der Separatorfolienbahn S beim Durchlaufen verschiedener Bewegungsprofile des Tisches über die Zeit t hinweg verhält. Ein erster Beschleunigungsverlauf a1 ist dargestellt für Beschleunigungen, die typischerweise an der Bahn entstehen, wenn der Tisch ein herkömmlicherweise verwendetes trapezförmiges Geschwindigkeitsprofil v1, welches in Figur 4 dargestellt ist, mit einem eindimensionalen Bewegungsprofil durchläuft.

Es ist aus Figur 3 zu erkennen, dass bereits das Vorsehen eines M-förmigen Geschwindigkeitsprofils v2 des Tisches, wie es in Figur 4 gezeigt ist, eine deutliche Abmilderung der Beschleunigungsüberhöhung am Scheitelpunkt etwa in der Mitte des Profils bewirkt. Dies ist anhand des zweiten Beschleunigungsverlaufes a2 zu erkennen.

Noch weiter verbessert in Hinblick auf extremale Werte wird jedoch die Beschleunigung an der Separatorfolienbahn, wenn ein M-förmiges Geschwindigkeitsprofil v3 mit einer zweidimensionalen Bewegung durchlaufen wird, wie es gemäß einem zweiten Ausführungsbeispiel vorgeschlagen wird. Dann ergibt sich ein dritter Beschleunigungsverlauf a3, der vom Niveau im negativen Bereich her betragsmäßig niedriger ist sowie im Scheitelpunkt und rund herum um den Scheitelpunkt insgesamt zu den überwiegenden Zeitpunkten niedrigere Werte annimmt.

Besonders vorteilhafterweise wird durch den zusätzlichen Freiheitsgrad nicht nur die Beschleunigung der Separatorfolie verbessert, sondern bei geeigneter Wahl des Verfahrprofils auch die Beschleunigung an den beteiligten Achsen für die Tischbewegung verbessert. Es reduziert sich insbesondere die Beschleunigung des Tischs in horizontaler Richtung. Durch die zweidimensionale Bewegung existiert eine Beschleunigung in vertikaler Richtung, die abhängig vom möglichen Verfahrweg in horizontaler Richtung ist. Bei der zweidimensionalen Bewegung nimmt somit die Beschleunigung in vertikaler Richtung zu, je mehr sich die Bahn des Tischs an einen Halbkreis annähert. Die Belastung der Mechanik nimmt dann in horizontaler Richtung ab und in vertikaler Richtung zu. Daher wird die vertikale Achse vorteilhafterweise möglichst leicht ausgestaltet. Dadurch verbessert sich die Beanspruchung verbauter Hardware und die Langlebigkeit der Antriebe.

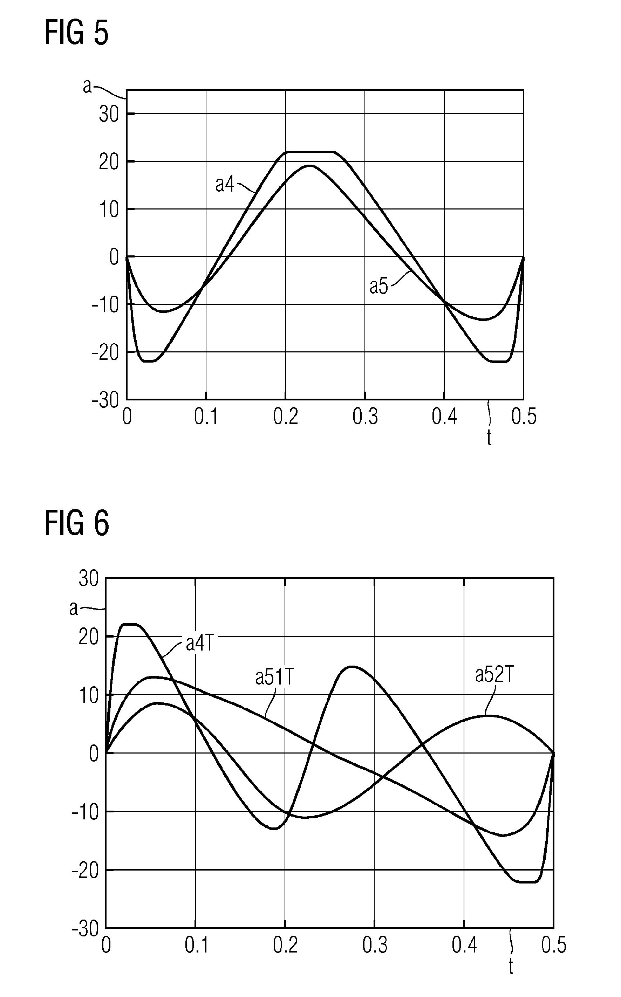

Figur 5 veranschaulicht die Reduzierung der Beschleunigungswerte der Separatorfolie über den Bewegungsablauf hinweg nochmals für optimierte Tischbewegungsprofile, wobei der optimierte Beschleunigungsverlauf a4 für eine eindimensionale optimierte Tischbewegung mit dem entsprechenden in Figur 6 skizzierten eindimensionalen Beschleunigungsverlauf a4T des Tisches T gezeigt ist. Gegenübergestellt wurde in Figur 5 ein optimierter Beschleunigungsverlauf a5 mit durchgängig betragsmäßig niedrigeren Beschleunigungswerten, der sich bei einer zweidimensionalen Bewegung gemäß einem dritten Ausführungsbeispiel ergibt.

Dazugehörig sind die in Figur 6 gezeigten Tischbeschleunigungsprofile für die horizontale Achse a51T sowie für den vertikalen Anteil der Bewegung mit der Beschleunigung an der vertikalen Achse a52T. Auch für den Bewegungsanteil des Tisches in horizontaler Richtung hat sich somit mit dem gewählten Bewegungsprofil auf der gewählten Bahn mit den gewählten Geschwindigkeiten der Verlauf der auftretenden Beschleunigungen verbessert, so dass die Hardware möglichst geschont wird.

Für den Optimierungsalgorithmus wurden Werte von 0.3 m für die Amplitude Amp der Bewegung (gezeigt in Figur 2), 0.1 m für die Tischbreite b (ebenfalls gezeigt in Figur 2) sowie 0.025 m für die Höhe (h in Figur 2) angenommen. Zudem wurde eine maximale Beschleunigung der Separatorfolie von 22 m/s² als Eingangsparameter vorgegeben.

Auch hier ergeben sich durch die optimierte zweidimensionale Bewegung nochmals betragsmäßig niedrigere Werte für die jeweiligen Beschleunigungen an den Achsen, so dass der Batteriestapelprozess insgesamt mit der vorgeschlagenen zweidimensionalen Relativbewegung zu verbesserten Beschleunigungsverläufen an der Separatorfolie und an den für die Relativbewegung zuständigen Achsen führt.

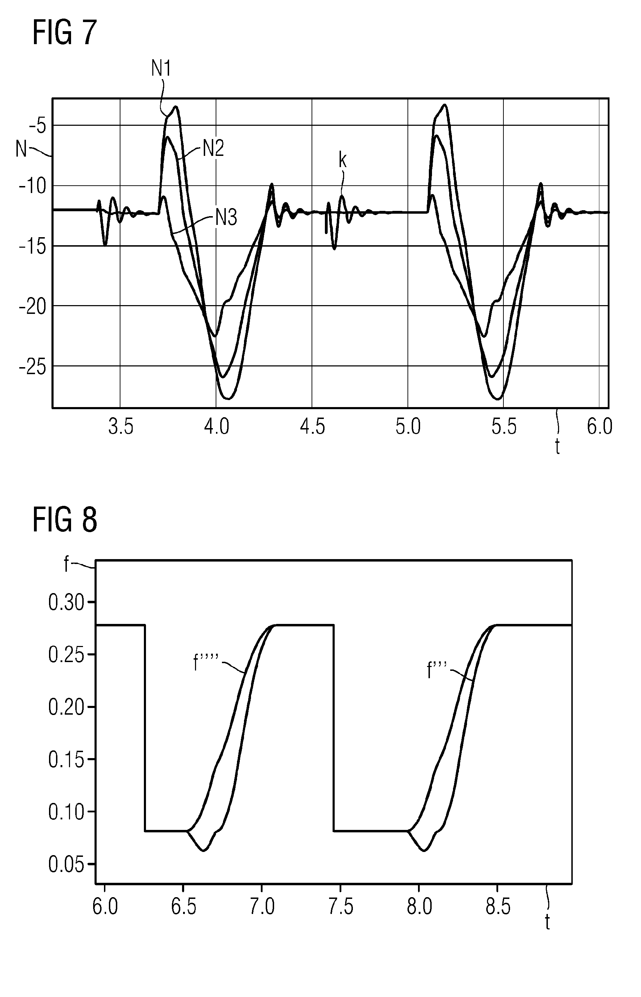

Figur 7 zeigt Verläufe, wie sie sich für die an der Separatorfolie herrschende Zugspannung N, auch Bahnzug oder Bahnspannung genannt, ergeben je nach durchlaufenem Bewegungsprofil der Relativbewegung zwischen Tisch und Zuführvorrichtung. Der ersten Zugspannungskurve N1 liegt ein eindimensionales Bewegungsprofil des Tisches zugrunde, bei dem die Endposition des Tisches während der Klemmung der Elektrodenfolie mittels eines Klemmvorrichtung C (veranschaulicht in Figur 1) in einem gewissen lotrechten Abstand h zum Ende der Zuführvorrichtung in der Größenordnung einiger Zentimeter steht. Deutlich zu erkennen im Bereich k ist die Auswirkung des sogenannten Klemmschlags auf die Zugspannung N der Separatorfolie, die durch die schlagartige geringfügige Änderung der freien Weglänge f', f" der Separatorfolie außerhalb der Zuführvorrichtung bis hin zum Tisch entsteht. Die Mechanismen wie Tänzerrollen etc. in der Wickelmaschine reagieren auf die Änderung mit entsprechenden Ausgleichsbewegungen, können aber einen Ausschlag in der Kurve nicht vollständig verhindern.

Demgegenüber sind die zweite Zugspannungskurve N2 und die dritte Zugspannungskurve N3 gezeigt, die sich bei zweidimensionalen Tischbewegungen für zwei unterschiedliche Amplituden ergeben. Es ist erkennbar, dass keinerlei Effekte eines Klemmschlages auftreten, da die Endpositionen des Tisches gemäß diesem vierten Ausführungsbeispiel so gewählt werden, dass die Separatorfolie während der Tischstellungen in den Endpositionen jeweils im Wesentlichen waagrecht vom untersten Punkt der Umlenkrollen der Zuführvorrichtung bis hin zur letzten oder obersten Klemmung auf dem Batteriezellstapel verläuft. Dadurch wird eine Änderung der freien Weglänge f" der Separatorfolie durch das Aufsetzen der Klemmen verhindert.

Zudem ist durch den Vergleich der beiden Zugspannungskurven N2 und N3 auch erkennbar, dass bei größerer Amplitude der zweidimensionalen Bewegung, also mehr Bewegungsfreiraum des Tisches in vertikaler Richtung, was der Zugspannungskurve N3 entspricht, die Werte der Bahnspannung an der Separatorfolie nochmals reduziert werden.

Dieser Effekt wird anhand von Figur 8 verdeutlicht, die ein Diagramm der freien Weglänge f der Separatorfolie über der Zeit t für die beiden Bewegungsprofile mit jeweiliger Amplitude zeigt. Während nach dem Start der Bewegung aus der Endposition heraus im Falle der niedrigeren Amplitude das Bahnmaterial für kurze Zeit noch in das Batteriezellen-Stacking-System hineingeschoben wird, die freie Weglänge f" also kleiner wird, führt das Bewegungsprofil mit der größeren Amplitude dazu, dass sogar keinerlei Bahnmaterial in die Zuführvorrichtung zurückgeschoben wird, sondern von vornherein ein langsames Herausziehen von Bahnmaterial aus dem Batteriezellen-Stacking-System heraus erfolgt. Die freie Weglänge fʺʺ wird somit über den gesamten Bewegungsablauf von einer Endposition in die andere bis zur Klemmung hinweg größer.

Die Erfindung betrifft ein Verfahren zur Bewegungsführung einer Relativbewegung zwischen einem Tisch eines Batteriezellen-Stacking-Systems und einer Zuführvorrichtung mit Bahnführungskomponenten für eine Separatorfolienbahn des Batteriezellen-Stacking-Systems sowie eine zugehörige Steuerungsvorrichtung. Durch eine vorgeschlagene Relativbewegung mit Bewegungsanteilen in vertikaler Richtung überlagert zur Bewegung in horizontaler Richtung wird das Beschleunigungsprofil der Separatorfolienbahn derart geändert, dass Maximalwerte betragsmäßig reduziert werden.

## Patentansprüche

1. Verfahren zur Bewegungsführung einer Relativbewegung zwischen einem Tisch (T) eines Batteriezellen-Stacking-Systems und einer Zuführvorrichtung (W) mit Bahnführungskomponenten für eine Separatorfolienbahn (S) des Batteriezellen-Stacking-Systems, aufweisend folgende Schritte:
- Ausführen eines horizontalen Anteils der Relativbewegung zur horizontalen Verlagerung der Relativposition zwischen Tisch (T) und Zuführvorrichtung (W) durch einen Scheitelpunkt hindurch, wobei im Scheitelpunkt die Separatorfolienbahn vertikal steht, so dass durch die horizontale Verlagerung Anoden (A) und Kathoden (K) im Wechsel auf einen jeweiligen Abschnitt der Separatorfolienbahn (S) aufgelegt werden können,
**gekennzeichnet durch**
- ein Ausführen eines vertikalen Anteils der Relativbewegung,
wobei durch den vertikalen Anteil eine Beschleunigung (a3, a5) der Bewegung der Separatorfolienbahn (S) zumindest abschnittsweise, insbesondere in etwa im Bereich des Scheitelpunktes, reduziert wird.

2. Verfahren nach Anspruch 1, wobei der vertikale Anteil der Relativbewegung eine bogenförmige Relativbewegung bewirkt.

3. Verfahren nach einem der vorstehenden Ansprüche, wobei der vertikale Anteil der Relativbewegung einer Bewegung der Separatorfolienbahn (S) aufgrund des horizontalen Anteils der Relativbewegung in die Zuführvorrichtung (W) hinein entgegenwirkt und einer Bewegung der Separatorfolienbahn (S) aufgrund des horizontalen Anteils der Relativbewegung aus der Zuführvorrichtung (W) heraus entgegenwirkt.

4. Verfahren nach einem der vorstehenden Ansprüche, wobei der vertikale Anteil der Relativbewegung an Umkehrpunkten (p3, p5), insbesondere bei maximaler horizontaler Verlagerung, ein quasi vollständiges Aufliegen der Separatorfolienbahn (S) auf dem Tisch (T) oder parallel zum Tisch (T) bewirkt, insbesondere indem der vertikale Anteil der Relativbewegung die Zuführvorrichtung und den Tisch in vertikaler Richtung unter Berücksichtigung eines auf dem Tisch befindlichen Stapels maximal aneinander annähert.

5. Verfahren nach Anspruch 4, wobei durch das quasi vollständige Aufliegen der Separatorfolienbahn (S) eine Klemmung eines jeweiligen Abschnitts der Separatorfolienbahn (S) annähernd keine durch eine Längenänderung verursachte Beschleunigung an der Separatorfolienbahn bewirkt.

6. Verfahren nach einem der vorstehenden Ansprüche, wobei die Relativbewegung durch einen in horizontaler und in vertikaler Richtung bewegbaren Tisch (T) oder durch einen in vertikaler Richtung bewegbaren Tisch (T) und eine in horizontaler Richtung bewegbare Zuführvorrichtung (W) erfolgt.

7. Verfahren nach einem der vorstehenden Ansprüche, wobei die Relativbewegung durch eine in horizontaler und in vertikaler Richtung bewegbare Zuführvorrichtung (W) oder durch eine in vertikaler Richtung bewegbare Zuführvorrichtung (W) und einen in horizontaler Richtung bewegbaren Tisch (T) erfolgt.

8. Verfahren nach einem der vorstehenden Ansprüche, wobei die Relativbewegung in Hinblick auf eine Reduzierung der Beschleunigung der Separatorfolienbahn (S) optimiert wird.

9. Verfahren nach Anspruch 8, wobei in einen Optimierungsalgorithmus geometrische Randbedingungen, insbesondere eine Amplitude (Amp) des vertikalen Bewegungsanteils, eine Tischgeometrie, eine Höhe (h) zwischen einer letzten Führungskomponente (W) des Batteriezellen-Stacking-Systems und dem Tisch (T), eine Tischbreite (b) oder ein maximaler horizontaler Abstand zwischen einer Mitte des Tisches (T) und der letzten Führungskomponente (W) des Batteriezellen-Stacking-Systems, eingehen sowie ferner Dynamikgrenzen beteiligter Antriebe des Tischs (T) und/ oder des Batteriezellen-Stacking-Systems, insbesondere maximal zulässige Werte für eine Geschwindigkeit, eine Beschleunigung und/oder einen Ruck jeweiliger axialer Bewegungen.

10. Steuerungsvorrichtung zur Bewegungsführung ausgestaltet und eingerichtet zur Durchführung des Verfahrens gemäß einem der vorstehenden Ansprüche.

11. Batteriezellen-Stacking-System mit Zuführvorrichtung(W) mit Bahnführungskomponenten für eine Separatorfolienbahn (S) und Tisch (T), aufweisend eine Steuerungsvorrichtung nach Anspruch 10, sowie aufweisend Antriebe zur Ausführung einer Relativbewegung zwischen dem Tisch (T) und der Zuführvorrichtung (W) in horizontaler und vertikaler Bewegungsrichtung.
